# EUROPEAN PATENT SPECIFICATION

(11) **EP 2 749 597 B1**
(45) Date of publication and mention of the grant of the patent: **13.04.2016**
(21) Application number: 12827736.5
(22) Date of filing: 16.08.2012
(51) Int. Cl.: C08L 67/02, B29C 45/00, C08K 3/00, C08K 7/14, C08L 101/00

(54) **INJECTION MOLDING**
SPRITZGUSSWERKZEUG
MOULAGE PAR INJECTION

(30) Priority: 26.08.2011 JP 2011185132
(43) Date of publication of application: 02.07.2014
(73) Proprietor: Wintech Polymer Ltd., Minato-ku Tokyo 108-8280 (JP)
(72) Inventor: GOSHIMA, Kazuya, Fuji-shi Shizuoka 416-8533 (JP); KOBAYASHI, Kazuhito, Fuji-shi Shizuoka 416-8533 (JP); DOI, Kumiko, Fuji-shi Shizuoka 416-8533 (JP)
(74) Representative: Lux, Berthold
(86) International application number: PCT/JP2012/070786
(87) International publication number: WO 2013/031541

(56) References cited:
- WO-A1-03/046085
- JP-A- H01 301 748
- JP-A- H11 181 256
- JP-A- S55 120 651
- JP-A- 2002 535 471
- JP-A- 2003 082 210
- JP-A- 2003 503 574
- JP-A- 2009 161 748
- US-A- 4 122 061

## Description

### Technical Field

The present invention relates to an injection-molded article, and more specifically relates to an injection-molded article suitable for use in a housing of a heat radiation apparatus in which good appearance, low warpage properties, heat resistance and the like are required.

### Background Art

As a material of a housing of an apparatus that radiates heat (hereinafter, may be referred to as "heat radiation apparatus") such as an IH cooling heater (electromagnetic induction heating cooker), a resin composition is widely used. As the resin composition used in a heat radiation apparatus, not only heat resistance is required, but also good appearance such as having excellent glossiness is required specifically for those used indoors, such as home appliances and gas appliances, and when used for a top plate or the like, low warpage properties are required. In addition, these apparatuses are used repeating heating and cooling, thus are required to have certain durability even repeating heating and cooling.

On the other hand, a polyester resin composition having both advantages by mixing a polyethylene terephthalate resin (hereinafter, may be referred to as "PET") having heat resistance and a polybutylene terephthalate resin (hereinafter, may be referred to as "PBT") having excellent molding processability is known (for example, see JP 53 92862 A, JP 53 102360 A, and JP 62 45647 A). Effects such as excellent heat resistance and reduction of warping and deformation are obtained by the above-described resin composition, but at present, a resin composition that satisfies all performance required in the heat radiation apparatus used indoors as described above has been not yet known.

US 4 122 061 A discloses reinforced, impact modified thermoplastic polyester compositions which comprise a poly(1,4-butylene terephthalate) resin, a poly(ethylene terephthalate) resin, a fibrous glass reinforcement alone or in combination with a mineral reinforcing filler and, as an impact modifier therefor, a polyolefin or olefin based copolymer resin.

### Summary of Invention

### Technical Problem

An object of the present invention is to provide an injection-molded article having excellent appearance, low warpage properties, heat resistance and durability to heating and cooling.

### Solution to Problem

The present invention that solves the above object is as described below.
[1] An injection-molded article in which (1) the deflection temperature under load in accordance with ISO 75-1 is 165 to 220°C, (2) the surface gloss at 45° by the JIS Z8741 testing method is 95 to 110, (3) the flatness of a flat plate of 120-mm length, 120-mm width and 2-mm thickness as defined in JIS B0021 is 0 to 2 mm, and (4) the tensile elongation at break measured in accordance with ISO 527-1, 2 after heat-treating a test piece for evaluating tensile properties molded according to ISO 3167 in a hot air oven at 150°C for ten days and then treating the test piece at 23°C and 50% RH for 24 hours is 1.5% or more, the injection-molded article comprising, based on 100 parts by mass of the total content of (A) a polybutylene terephthalate resin and (B) a polyethylene terephthalate resin, 3 to 20 parts by mass of (C) an elastomer, 10 to 20 parts by mass of (D) a glass fiber, 10 to 20 parts by mass of (E) an inorganic filler, and 1 part by mass or less of (F) a transesterification inhibitor, wherein the mass ratio of the component (A) and the component (B) (A/B) is 3/1 to 1/1, and the mass ratio of the component (D) and the component (E) (D/E) is 1/1.3 to 1.3/1.
[2] The injection-molded article according to the item [1], which is, further, (5a) V-0 in a flame retardant test of UL94 standard.
[3] The injection-molded article according to the item [1], which is, further, (5b) 5VA or 5VB in a flame retardant test of UL94 standard.
[4] The injection-molded article according to any of the items [1] to [3], which is used in all or part of a housing of a heat radiation apparatus.
[5] The injection-molded article according to the item [4], wherein the heat radiation apparatus is an indoor electric appliance, an indoor gas appliance, or an indoor oil appliance.
[6] The injection-molded article according to the item [4], wherein the heat radiation apparatus is a heating cooker.
[7] The injection-molded article according to the item [6], wherein the heating cooker is an electromagnetic induction heating cooker.
[9] The injection-molded article according to the item [1], further including 10 to 20 parts by mass of (G) a flame retardant, 1 to 10 parts by mass of (H) a flame retardant aid, and 1 part by mass or less of (I) an anti-dripping agent.
[10] The injection-molded article according to the item [1] or [9], wherein the (A) polybutylene terephthalate resin has an intrinsic viscosity of 0.80 to 1.20 dL/g.

### Advantageous Effects of Invention

According to the present invention, an injection-molded article having excellent appearance, low warpage properties, heat resistance and durability to heating and cooling can be provided.

### Brief Description of Drawings

Fig. 1 is a plan view of a test piece used for measurement of the surface gloss.
Fig. 2 is a plan view of a test piece used for measurement of the flatness.

### Description of Embodiments

The injection-molded article of the present invention is characterized in that (1) the deflection temperature under load in accordance with ISO 75-1 is 165 to 220°C, (2) the surface gloss at 45° by the JIS Z8741 testing method is 95 to 110, (3) the flatness of a flat plate of 120-mm length, 120-mm width and 2-mm thickness as defined in JIS B0021 is 0 to 2 mm, and (4) the tensile elongation at break measured in accordance with ISO 527-1, 2 after heat-treating a test piece for evaluating tensile properties molded according to ISO 3167 in a hot air oven at 150°C for ten days and then treating the test piece at 23°C and 50% RH for 24 hours is 1.5% or more.

First, the requirements of the above (1) to (4) will be described in detail as follows.

### (1) Deflection temperature under load in accordance with ISO 75-1

The deflection temperature under load is an index of heat resistance and is obtained by being measured as follows. More specifically, a resin composition that is a source of the injection-molded article of the present invention is dried at 140°C for 3 hours, then a test piece for evaluating flexural properties of 10 mm × 4 mm × 80 mm determined in ISO 3167 is molded by an injection molding machine at a cylinder temperature of 260°C and a mold temperature of 80°C, and heat-treated at 190°C for 1 hour, then the deflection temperature under a load of 1.82 MPa is measured in accordance with ISO75-1, 2.

When the deflection temperature under load is 165 to 220°C, it is sufficient as the heat resistance required for the injection-molded article of the present invention. At a deflection temperature under load of less than 165°C, it is inferior in heat resistance, and at a deflection temperature under load exceeding 220°C, it is no problem in heat resistance but a so-called ultrahigh heat-resistant resin such as a polyphenylene sulfide resin or a liquid crystalline polymer is necessary, thus high processing temperature is necessary, and cost also rises. The deflection temperature under load is preferably 170 to 220°C, and more preferably 180 to 220°C.

### (2) Surface gloss at 45° by JIS Z8741 testing method

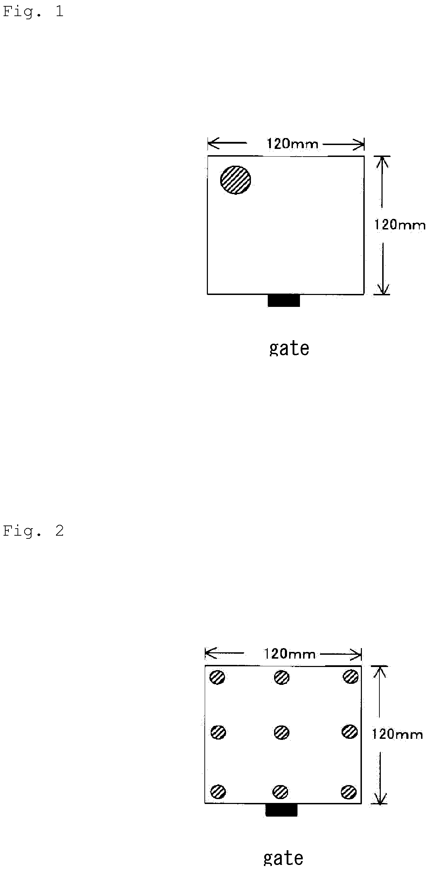

The surface gloss is an index of the quality of appearance and is obtained by being measured as follows. More specifically, from the resin composition that is a source of the injection-molded article of the present invention, a test piece of a flat plate of 120-mm length, 120-mm width and 2-mm thickness is molded, as shown in Fig. 1, by an injection molding machine in the conditions of a cylinder temperature of 260°C, a mold temperature of 60°C, an injection pressure of 60 MPa, an injection rate of 17 mm/s, an injection time of 25 seconds, a cooling time of 10 seconds and a whole molding cycle of 45 seconds. The 45° specular gloss in the site shown by hatching in Fig. 1 is measured according to JIS Z8741, and the 45° specular gloss is defined as the surface gloss.

When the surface gloss is 95 to 110, good luster is exhibited, and sufficient appearance is obtained. When the surface gloss is less than 95, it is not sufficient as the surface appearance of the product exposed to a public view, and when exceeding 110, a so-called unreinforced resin material to which a reinforcing filler such as glass fiber is not added has to be used, and the article is inferior in heat resistance, mechanical properties, and the like. Preferred surface gloss is from 100 to 110.

### (3) Flatness in JIS B0021

The flatness is an index of low warpage properties (flatness) and is obtained by being measured as follows. More specifically, from the resin composition that is a source of the injection-molded article of the present invention, a test piece of a flat plate of 120-mm length, 120-mm width and 2-mm thickness is molded, as shown in Fig. 2, by an injection molding machine in the conditions of a cylinder temperature of 260°C, a mold temperature of 60°C, an injection pressure of 60 MPa, an injection rate of 17 mm/s, an injection time of 10 seconds, a cooling time of 10 seconds and a whole molding cycle of 45 seconds, and the flatness is measured. The flatness is obtained by measuring 9 points shown by hatching in Fig. 2 by CNC vision measuring system (manufactured by Mitutoyo Corporation).

When the flatness is 0 to 2 mm, the article is less curved and has good low warpage properties. When the flatness exceeds 2 mm, the article is much curved and has insufficient low warpage properties. The flatness is preferably 0 to 1 mm, and is preferable as close to 0 mm.

### (4) Tensile elongation at break measured in accordance with ISO 527-1, 2 after heating and cooling

The tensile elongation at break shows tensile strength after heating and cooling a test piece, and is an index of the durability of the resin molded article after heating and cooling (herein referred to as "durability to heating and cooling") and is obtained by being measured as follows. More specifically, a resin composition that is a source of the injection-molded article of the present invention is dried at 140°C for 3 hours, then a test piece for evaluating tensile properties determined in ISO 3167 is molded by an injection molding machine at a cylinder temperature of 260°C and a mold temperature of 80°C, and the test piece is heat-treated in a hot air oven at 150°C for ten days and then treated at 23°C and 50% RH for 24 hours, then the tensile strength is measured according to ISO 527-1, 2 (thickness of test piece of 4 mm).

When the tensile strength is 1.5% or more, the durability to heating and cooling is good. When the tensile strength is less than 1.5%, the durability to heating and cooling is poor. The tensile strength is preferably 1.8% or more and more preferably 2.0% or more.

It is preferred that the injection-molded article of the present invention be, further, (5a) V-0 in a flame retardant test of UL94 standard or (5b) 5VA or 5VB in a flame retardant test of UL94 standard.

These flame retardant tests will be described in detail as follows.

### (5a) Flame retardancy (UL94-V 1.5 mm)

Flammability is tested using five strip specimens (thickness: 1.5 mm) according to a method of subject 94 of Underwriters Laboratories (UL94), and is evaluated according to the evaluation method described in UL94. V-0 shows sufficient flame retardancy.

### (5b) Flame retardancy (UL94-5V 1.5 mm)

Flammability is tested using five strip specimens (thickness: 1.5 mm), and burn-through characteristics during combustion is further tested using three flat plate test pieces (thickness: 1.5 mm), according to a method of subject 94 of Underwriters Laboratories (UL94), and both properties are evaluated according to the evaluation method described in UL94. 5VA and 5VB show further higher flame retardancy than the V-0 above.

The inj ection-molded articles described above can be used in all or part of a housing of a heat radiation apparatus. Here, the heat radiation apparatus includes not only apparatuses that release heat for the purpose of heating, such as heaters and heating cookers, but also apparatuses that would generate heat even though not intended, such as a switchboard. Specifically, the heat radiation apparatus includes indoor electrical appliances (television, recorder, audio, facsimile, refrigerator, mixer, juicer, food processor, air-conditioner, fan, electric carpet, heating appliance, dehumidification dryer, humidifier, washing machine, clothes dryer, vacuum cleaner, dishwashing dryer, dish dryer, iron, futon dryer, garbage disposal, charger, hand dryer, lighting fixtures, distribution board, wiring accessories, and the like), indoor gas appliances (gas table, oven, range, gas rice cooker, gas instantaneous water heater, water heater, gas fan heater, gas infrared space heater, gas heater, panel heater, and the like), indoor oil appliances (oil space heater, oil fan heater, and the like), and heating cookers such as electromagnetic induction heating cookers (range, rice cooker, pot, IH cooker / IH cooking heater, coffee maker, bread machine, toaster, electric pressure cooker, hot plate, and the like). The housing of these heat radiation apparatuses is required to have excellent appearance, low warpage properties, heat resistance and durability to heating and cooling, and the injection-molded article of the present invention can satisfy all required performances.

Specifically, the electromagnetic induction heating cooker usually includes a heating unit on the upper face, and the glass plate is disposed around the heating unit, and the top plate around them is required to have excellent appearance, low warpage properties, heat resistance and durability to heating and cooling, thus the injection-molded article of the present invention is particularly useful as a material of the top plate around them.

Subsequently, the component composition of the injection-molded article of the present invention will be described. In order to obtain the properties, the injection-molded article of the present invention include, based on 100 parts by mass of the total content of (A) a polybutylene terephthalate resin and (B) a polyethylene terephthalate resin, 3 to 20 parts by mass of (C) an elastomer, 10 to 20 parts by mass of (D) a glass fiber, 10 to 20 parts by mass of (E) an inorganic filler, and 1 part by mass or less of (F) a transesterification inhibitor, wherein the mass ratio of the component (A) and the component (B) (A/B) be 3/1 to 1/1, and the mass ratio of the component (D) and the component (E) (D/E) be 1/1.3 to 1.3/1.

Each component will be described in detail as follows.

### [(A) Polybutylene terephthalate resin]

A polybutylene terephthalate resin (PBT) is a resin obtained by polycondensation of a dicarboxylic acid component at least containing terephthalic acid or an ester-forming derivative thereof (a C₁₋₆ alkyl ester, an acid halide, or the like) and a glycol component at least containing an alkylene glycol having 4 carbon atoms (1,4-butanediol) or an ester-forming derivative thereof (an acetylated product or the like). A polybutylene terephthalate resin is not limited to a homopolybutylene terephthalate and may be a copolymer containing 60% by mol or more (particularly 75% by mol or more and 95% by mol or less) of butylene terephthalate units.

The terminal carboxyl group content of the polybutylene terephthalate resin is not particularly limited as long as it does not interfere with the effects of the present invention. The terminal carboxyl group content of the polybutylene terephthalate resin is preferably 30 meq/kg or less, and more preferably 25 meq/kg or less.

The intrinsic viscosity (IV) of the polybutylene terephthalate resin is not particularly limited within a range that does not interfere with the effects of the present invention. The intrinsic viscosity of the polybutylene terephthalate resin is preferably 0.80 to 1.20 dL/g. From the viewpoint of prevention of cracking and toughness improvement for improving durability to heating and cooling, the intrinsic viscosity is further preferably 0.85 to 1.15 dL/g. When using the polybutylene terephthalate resin having an intrinsic viscosity in this range, the polybutylene terephthalate resin composition to be obtained is particularly excellent in moldability. In addition, it is also possible to blend polybutylene terephthalate resins having different inherent viscosity to adjust the intrinsic viscosity. For example, it is also possible to blend a polybutylene terephthalate resin having an intrinsic viscosity of 1.0 dL/g and a polybutylene terephthalate resin having an intrinsic viscosity of 0.8 dL/g to prepare a polybutylene terephthalate resin having an intrinsic viscosity of 0.9 dL/g. For example, the intrinsic viscosity (IV) of the polybutylene terephthalate resin can be measured in o-chlorophenol in the condition of a temperature of 35°C.

In the polybutylene terephthalate resin, examples of the dicarboxylic acid component (comonomer component) other than terephthalic acid and ester-forming derivatives thereof include C₈₋₁₄ aromatic dicarboxylic acids such as isophthalic acid, phthalic acid, 2,6-naphthalene dicarboxylic acid and 4,4'-dicarboxydiphenyl ether; C₄₋₁₆ alkane dicarboxylic acids such as succinic acid, adipic acid, azelaic acid and sebacic acid; C₅₋₁₀ cycloalkane dicarboxylic acids such as cyclohexane dicarboxylic acid; and ester-forming derivatives (C₁₋₆ alkyl ester derivatives, acid halides, and the like) of these dicarboxylic acid components. These dicarboxylic acid components can be used alone or in combination of two or more kinds.

Among these dicarboxylic acid components, C₈₋₁₂ aromatic dicarboxylic acids such as isophthalic acid, and C₆₋₁₂ alkane dicarboxylic acids such as adipic acid, azelaic acid and sebacic acid are more preferable.

In the polybutylene terephthalate resin, examples of the glycol component (comonomer component) other than 1,4-butanediol include C₂₋₁₀ alkylene glycols such as ethylene glycol, propylene glycol, trimethylene glycol, 1,3-butylene glycol, hexamethylene glycol, neopentyl glycol and 1,3-octanediol; polyoxyalkylene glycols such as diethylene glycol, triethylene glycol and dipropylene glycol; alicyclic diols such as cyclohexanedimethanol and hydrogenated bisphenol A; aromatic diols such as bisphenol A and 4,4'-dihydroxy biphenyl: C₂₋₄ alkylene oxide adducts of bisphenol A such as ethylene oxide 2 mole adduct of bisphenol A and propylene oxide 3 mole adduct of bisphenol A; and ester-forming derivatives (acetylated products and the like) thereof. These glycol components can be used alone or in combination of two or more kinds.

Among these glycol components, C₂₋₆ alkylene glycols such as ethylene glycol and trimethylene glycol, polyoxyalkylene glycols such as diethylene glycol, alicyclic diols such as cyclohexanedimethanol and the like are more preferable.

Examples of the comonomer component that can be used in addition to the dicarboxylic acid component and the glycol component include aromatic hydroxycarboxylic acids such as 4-hydroxy benzoic acid, 3-hydroxy benzoic acid, 6-hydroxy-2-naphthoic acid and 4-hydroxy-4'-hydroxy biphenyl; aliphatic hydroxycarboxylic acids such as glycolic acid and hydroxy caproic acid; C₃₋₁₂ lactones such as propiolactone, butyrolactone, valerolactone and caprolactone (such as ε-caprolactone); and ester-forming derivatives (C₁₋₆ alkyl ester derivatives, acid halides, acetylated products and the like) of these comonomer components.

### [(B) Polyethylene terephthalate resin]

A polyethylene terephthalate resin is obtained by polycondensation of terephthalic acid or an ester-forming derivative thereof (a C₁₋₆ alkyl ester derivative, an acid halide or the like) and ethylene glycol or an ester-forming derivative thereof (an acetylated product, etc.), according to a known method.

The polyethylene terephthalate resin may be modified by copolymerizing a small amount of a modified component that gives a repeating unit other than a terephthaloyl unit and an ethylenedioxy unit, within a range that does not interfere with the effects of the present invention. The amount of the repeating unit other than a terephthaloyl unit and an ethylenedioxy unit is preferably less than 4% by mol, more preferably 3% by mol or less, and further preferably 2% by mol or less, in all repeating units of the polyethylene terephthalate resin.

In addition, the intrinsic viscosity (IV) of the polyethylene terephthalate resin is preferably 0.6 to 0.9 dL/g, from the viewpoint of flowability, prevention of cracking, toughness improvement for improving durability to heating and cooling, and the like.

The mass ratio of the component (A) and the component (B) described above (A/B) is preferably 3/1 to 1/1, and more preferably 3/1 to 3/2. When the component (B) is much contained, appearance becomes good, but when added in excess, crystallization takes time, moldability is poor, thus it is disadvantageous in productivity.

For molding conditions, it is necessary for the polybutylene terephthalate resin to be molded with a high temperature mold for promotion of crystallization, and in the present invention, since the mass ratio of the polybutylene terephthalate resin and the polyethylene terephthalate resin is larger than 1/1, it can be molded by ordinary molding conditions of the polybutylene terephthalate resin (for example, a mold temperature of 40 to 100°C that can accommodate with a water-cooled mold temperature regulator).

### [(C) Elastomer]

An elastomer is used to improve durability to heating and cooling and shock prevention. Examples include olefin-based elastomers, vinyl chloride elastomers, styrene-based elastomers, polyester-based elastomers, butadiene-based elastomers, urethane-based elastomers, polyamide-based elastomers and silicone-based elastomers, and specifically, ethylene ethyl acrylate (EEA), methacrylate-butylene-styrene (MBS) and ethylene glycidyl methacrylate (EGMA), polytetramethylene glycol (PTMG)-based polyester elastomers and the like can be used.

In the injection-molded article of the present invention, the elastomer is contained in an amount of 3 to 20 parts by mass and preferably 5 to 10 parts by mass, based on 100 parts by mass of the total content of the component (A) and the component (B) . The elastomer is contained in an amount of 3 to 20 parts by mass, whereby shock prevention effects are sufficiently exhibited, and durability to heating and cooling is also preferable.

### [(D) Glass fiber]

A glass fiber is used to improve the mechanical strength. A glass fiber having a fiber length (the state before being prepared into a composition by melt-kneading or the like) of 1 to 10 mm is preferred, and a glass fiber having a diameter of 5 to 20 µm is preferred.

In the injection-molded article of the present invention, the glass fiber is contained in an amount of 10 to 20 parts by mass and preferably 13 to 18 parts by mass, based on 100 parts by mass of the total content of the component (A) and the component (B). The glass fiber is contained in an amount of 10 to 20 parts by mass, whereby it is preferred since the mechanical strength in the injection-molded article of the present invention is improved.

### [(E) Inorganic filler]

An inorganic filler is used for the purpose of preventing warping, specific examples include talc, mica, glass flakes, glass beads, calcium carbonate and the like, and among them, talc and mica are preferred.

In the injection-molded article of the present invention, the inorganic filler is contained in an amount of 10 to 20 parts by mass and preferably 13 to 18 parts by mass, based on 100 parts by mass of the total content of the component (A) and the component (B). The inorganic filler is contained in an amount of 10 to 20 parts by mass, whereby it is preferred since warping of the injection-molded article of the present invention can be sufficiently prevented.

The mass ratio of the component (D) and the component (E) described above (D/E) is preferably 1/1.3 to 1.3/1 and more preferably 1/1.1 to 1.1/1. When the mass ratio (D/E) is 1/1.3 to 1.3/1, it is preferred since mechanical characteristics are good, and warping and deformation are also suppressed.

### [(F) Transesterification inhibitor]

A transesterification inhibitor is used to stabilize a polymer mixture and to inhibit a transesterification reaction in the mixture. Specific examples include at least one selected from inorganic phosphorus-based stabilizers (phosphates of an alkali metal or alkaline-earth metal, and the like) and organic phosphorus-based stabilizers (organic phosphites, organic phosphates, organophosphonates, and organophosphonites), and among them, sodium dihydrogen phosphate, calcium dihydrogen phosphate, biphenylene diphosphonites such as tetrakis(2,4-di-t-butyl)-4,4'-biphenylene diphosphonite and (2,4-di-t-butylphenyl)-4,4'-biphenylene diphosphonite and the like are preferable.

In the injection-molded article of the present invention, the transesterification inhibitor is contained in an amount of 1 part by mass or less and preferably 0.01 to 0.5 part by mass, based on 100 parts by mass of the total content of the component (A) and the component (B). The transesterification inhibitor is contained in an amount of 1 part by mass or less, whereby it is preferred since a transesterification reaction can be sufficiently suppressed.

It is preferred that the injection-molded article of the present invention further include 10 to 20 parts by mass of (G) a flame retardant, 1 to 10 parts by mass of (H) a flame retardant aid, and 1 part by mass or less of (I) an anti-dripping agent. Each component will be described in detail as follows.

### [(G) Flame retardant, (H) Flame retardant aid]

A flame retardant and a flame retardant aid are used to impart flame retardancy to the injection-molded article of the present invention. Specific examples of the flame retardant include halogen-based flame retardants such as brominated flame retardants, phosphorus-based flame retardants, nitrogen-based flame retardants and silicone-based flame retardants, and among them, brominated flame retardants and phosphorus-based flame retardants are preferred. Specific examples of the flame retardant aid include antimony compounds such as antimony trioxide and nitrogen-containing compounds such as triazine, and the flame retardant aid is selected according to the flame retardant to be used.

In the injection-molded article of the present invention, the flame retardant is contained in an amount of 10 to 20 parts by mass and preferably 13 to 18 parts by mass, based on 100 parts by mass of the total content of the component (A) and the component (B). Also, the flame retardant aid is contained in an amount of 1 to 10 parts by mass and preferably 4 to 6 parts by mass, based on 100 parts by mass of the total content of the component (A) and the component (B).

### [(I) Anti-dripping agent]

An anti-dripping agent is used to prevent dripping of the resin during combustion. Specific examples of the anti-dripping agent include fluorinated polyolefins such as polytetrafluoroethylene, tetrafluoroethylene/perfluoroalkyl vinyl ether copolymer, tetrafluoroethylene/hexafluoropropylene copolymer, tetrafluoroethylene/ethylene copolymer, vinylidene fluoride and polychlorotrifluoroethylene, and among them, polytetrafluoroethylene, tetrafluoroethylene/perfluoroalkyl vinyl ether copolymer, tetrafluoroethylene/hexafluoropropylene copolymer and tetrafluoroethylene/ethylene copolymer are preferably used.

In the injection-molded article of the present invention, the anti-dripping agent is contained in an amount of 1 part by mass or less and preferably 0.1 to 0.5 parts by mass, based on 100 parts by mass of the total content of the component (A) and the component (B). The anti-dripping agent is contained in an amount of 1 part by mass or less, whereby a sufficient anti-drip capacity can be exhibited.

### [Other ingredients]

The inj ection-molded article of the present invention may contain other components as necessary. As the other components, an antioxidant such as a hindered phenol, a phosphorus-based secondary antioxidant, a thioether-based secondary antioxidant, an inorganic nucleating agent, a mold release agent, a coloring agent and the like can be contained.

### [Method for producing polybutylene terephthalate resin composition]

The method for producing a polybutylene terephthalate resin composition is not particularly limited, and an equipment and method generally used as a conventionally known resin composition preparation method can be used. For example, it is possible to mix components, then melt-knead the mixture by a uniaxial or biaxial extruder or other melt-kneader to prepare as a molding pellet. A plurality of extruders or other melt-kneaders may be used. In addition, any methods such as a method of simultaneously adding all components and a method of adding some components in the middle of kneading can be used. Note that mixing and adding some of the resin components as a fine powder to the other components is a preferred method in performing uniform blending of these components.

### Examples

Hereinbelow, the present invention is further specifically described with reference to examples, but the present invention is not limited to the following examples.

### [Examples, Comparative Examples]

In each of the examples and comparative examples, (A) a polybutylene terephthalate resin (PBT), (B) a polyethylene terephthalate resin (PET), (C) ethylene ethyl acrylate, (D) a glass fiber, (E) an inorganic filler (talc or mica), (F) sodium dihydrogen phosphate, (G) brominated epoxy, (H) antimony trioxide, (I) polytetrafluoroethylene, a hindered phenol and a fatty acid ester were each blended in the number of parts shown in Table 1 and Table 2 below, to prepare a resin composition by the method described below. Subsequently, the following evaluations were carried out using the resulting resin

### compositions.

The details of the each component are as follows.
PBT (IV = 1.14): manufactured by WinTech Polymer Ltd.
PBT (IV = 0.88): manufactured by WinTech Polymer Ltd.
PBT (IV = 0.69): manufactured by WinTech Polymer Ltd.
PET (IV = 0.7): manufactured by Teijin Chemical Limited.
Glass fiber: manufactured by NITTO BOSEKI CO., LTD., chopped strand with an average fiber diameter φ of 13 µm
Talc: Talc 3A manufactured by NIPPON TALC Co., Ltd., average particle size of 17 to 18 µm
Mica: Suzorite mica 150-S manufactured by WESTERN JAPAN TRADING CO., LTD.
Brominated epoxy: F3100 manufactured by ICL-IP JAPAN Ltd.
Antimony trioxide: PATOX-M manufactured by NIHON SEIKO CO., LTD.
Sodium dihydrogen phosphate: manufactured by YONEYAMA CHEMICAL INDUSTRY CO., LTD.
Hindered phenol: IRGANOX 1010 manufactured by BASF Japan Ltd.
Fatty acid ester: manufactured by Clariant (Japan) K.K., montan acid wax, Licowax E
Polytetrafluoroethylene: Fluon CD-076 manufactured by ASAHI GLASS CO., LTD
Ethylene ethyl acrylate: NUC-6570 manufactured by NUC Corporation

### [Preparation of polybutylene terephthalate resin composition]

The above substances were blended at a ratio shown in Table 1 and Table 2 below (unit is parts by mass) and were melt-kneaded by a biaxial extruder (manufactured by The Japan Steel Works, LTD.) having a 30-mm φ screw at 260°C to obtain a polybutylene terephthalate resin composition in the form of a pellet.

### (1) Low warpage properties (flatness)

From the resin composition obtained as described above, a test piece of a flat plate of 120-mm length, 120-mm width and 2-mm thickness was molded by an injection molding machine in the conditions of a cylinder temperature of 260°C, a mold temperature of 60°C, an injection pressure of 60 MPa, an injection rate of 17 mm/s, an injection time of 10 seconds, a cooling time of 10 seconds and a whole molding cycle of 45 seconds, and the flatness was measured. The flatness was obtained by measuring 9 points shown in Fig. 2 by CNC vision measuring system (manufactured by Mitutoyo Corporation). The measurement result is shown in Table 1 and Table 2.

### (2) Appearance (surface gloss)

From the resin composition obtained as described above, a test piece of a flat plate of 120 mm each side and 2-mm thickness was molded by an injection molding machine in the conditions of a cylinder temperature of 260°C, a mold temperature of 60°C, an injection pressure of 60 MPa, an injection rate of 17 mm/s, an injection time of 25 seconds, a cooling time of 10 seconds and a whole molding cycle of 45 seconds, and the 45° specular gloss in the site shown by hatching in Fig. 1 was measured according to JIS Z8741, and was defined as the surface gloss. The measurement result is shown in Table 1 and Table 2.

### (3) Durability to heating and cooling

The resin composition obtained as described above was dried at 140°C for 3 hours, then a test piece for evaluating tensile properties determined in ISO 3167 was molded by an injection molding machine at a cylinder temperature of 260°C and a mold temperature of 80°C, and the test piece was heat-treated in a hot air oven at 150°C for ten days and then treated at 23°C and 50% RH for 24 hours, then the tensile elongation at break was measured according to ISO 527-1, 2. The measurement result is shown in Table 1 and Table 2.

### (4) Heat resistance

The resin composition was dried at 140°C for 3 hours, then a test piece for evaluating flexural properties of 10 mm × 4 mm × 80 mm determined in ISO 3167 was molded by an injection molding machine at a cylinder temperature of 260°C and a mold temperature of 80°C, then the deflection temperature under a load of 1.82 MPa was measured in accordance with ISO75-1, 2. The measurement result is shown in Table 1 and Table 2.

### (5) Flame retardancy

(a) Flammability was tested using five strip specimens (thickness: 1.5 mm) according to a method of subject 94 of Underwriters Laboratories (UL94), and was evaluated according to the evaluation method described in UL94. The measurement result is shown in Table 1 and Table 2. V-0 shows good flame retardancy, and V-2 is inferior to V-0.
(b) Flammability was tested using five strip specimens (thickness: 1.5 mm), and burn-through characteristic during combustion was further tested using three flat plate test pieces (thickness: 1.5 mm), according to a method of subject 94 of Underwriters Laboratories (UL94), and both properties were evaluated according to the evaluation method described in UL94. The measurement result is shown in Table 1 and Table 2. 5VA and 5VB show further higher flame retardancy than the V-0 above.

### (6) Strength (tensile strength)

The polyester resin composition was dried at 140°C for 3 hours, then a test piece for evaluating tensile properties determined in ISO 3167 was molded by an injection molding machine at a cylinder temperature of 260°C and a mold temperature of 80°C, and the tensile strength was measured according to ISO 527-1, 2 (thickness of test piece of 4 mm). The measurement result is shown in Table 1 and Table 2.

### (7) Elastic modulus (flexural modulus)

The polyester resin composition was dried at 140°C for 3 hours, then a test piece for evaluating flexural properties of 10 mm × 4 mm × 80 mm determined in ISO 3167 was molded by an injection molding machine at a cylinder temperature of 260°C and a mold temperature of 80°C, and the flexural modulus was measured in accordance with ISO 178. The measurement result is shown in Table 1 and Table 2.

### (8) Flowability

The polyester resin composition was dried at 140°C for 3 hours, then the flowability was measured using CAPIROGRAPH 1B (manufactured by Toyo Seiki Seisaku-sho, Ltd.), at a furnace temperature of 260°C, a capillary of φ 1 mm × 20 mm, and a shear rate of 1000 sec⁻¹ in accordance with ISO 11443. The measurement result is shown in Table 1 and Table 2. When the value is lower, it is excellent in flowability during melting and is excellent in flowability during molding.

**[Table 1]**

| | | Example 1 | Example 2 | Example 3 | Example 4 |
|---|---|---|---|---|---|
| (A) | PBT (IV=1.14) | | 67.3 | | |
| | PBT (IV=0.88) | 67.3 | | 60. 9 | 67.3 |
| | PBT (IV=0.69) | | | | |
| (B) | PET (IV=0.7) | 32. 7 | 32.7 | 39.1 | 32.7 |
| (C) | Ethylene Ethyl Acrylate | 8.2 | 8.2 | 29.4 | 8.2 |
| (D) | Glass Fiber | 16.4 | 16.4 | 19.6 | 8.2 |
| (E) | Talc | 16.4 | 16.4 | 19. 6 | 24.5 |
| | Mica | | | | |
| (F) | Sodium Dihydrogen Phosphate | 0.3 | 0.3 | 0.4 | 0.3 |
| (G) | Brominated Epoxy | 14.9 | 14.9 | 17.8 | 14.9 |
| (H) | Antimony Trioxide | 5.9 | 5.9 | 7.0 | 5.9 |
| (I) | Polytetrafluoroethylene | 0.5 | 0.5 | 0. 6 | 0.5 |
| Others | Hindered Phenol | 0.3 | 0.3 | 0.4 | 0. 3 |
| | Fatty Acid Ester | 0.8 | 0.8 | 1.0 | 0.8 |
| Low Warpage Properties | Flatness [mm] | 1.0 | 1.0 | 1.0 | 1.0 |
| Appearance | Surface Gloss | 100 | 100 | 98 | 102 |
| Durability to Heating and Cooling | Tensile Elongation at Break [%] after 10 Days at 150° C and after 24 Hours at 23° C | 2.0 | 2.1 | 3.5 | 1.8 |
| Flame Retardancy | UL94-V (1.5mm) | V-0 | V-0 | V-2 | V-0 |
| | UL94-5V(1.5mm) | 5VA | 5VA | - | - |
| Strength | Tensile Strength [MPa] | 86 | 87 | 79 | 67 |
| Elastic Modulus | Flexural Modulus [MPa] | 5460 | 5510 | 4330 | 5220 |
| Heat Resistance | Deflection Temperature under Load [°C] | 180 | 180 | 165 | 172 |
| Flowability | Melting Viscosity [kPa × s] | 0.19 | 0.22 | 0.17 | 0.21 |

**[Table 2]**

| | | Comparative Example 1 | Comparative Example 2 | Comparative Example 3 | Example 4 | Example 5 | Comparative Example 6 | Comparative Example 7 | Comparative Example 8 | Comparative Example 9 | Comparative Example 10 |
|---|---|---|---|---|---|---|---|---|---|---|---|
| (A) | PBT (IV=1.14) | | | 69,7 | | | | | | | |
| | PBT (IV=0.88) | | 69,7 | | | | | | 84,9 | 69,3 | 67,3 |
| | PBT(IV=0.69) | 69,7 | | | 71,9 | 67,3 | 69,7 | 71,9 | | | |
| (B) | PET(IV=0.7) | 30,3 | 30,3 | 30,3 | 28,1 | 32.7 | 30,3 | 28,1 | 15,1 | 30,7 | 32,7 |
| (C) | Ethylene Ethyl Acrylate | | | | | | | | | 1,5 | 8,2 |
| (D) | Glass Fiber | 15,1 | 15,1 | 15,1 | 7,0 | 24,5 | 15,1 | 21,1 | 15,1 | 15,4 | 24,5 |
| (E) | Talc | 15,1 | 15,1 | 15,1 | 14,1 | 16,4 | | | 15,1 | 15,1 | 8,2 |
| | Mica | | | | | | 15,1 | | | | |
| (F) | Sodium Dihydrogen Phosphate | 0,3 | 0,3 | 0,3 | 0,3 | 0,3 | 0,3 | 0,3 | 0,3 | 0,3 | 0,3 |
| (G) | Brominated Epoxy | 13,8 | 13,8 | 13,8 | 12,8 | 14,9 | 13,8 | 12,8 | 13,8 | 14 | 14,9 |
| (H) | Antimony Trioxide | 5,4 | 5,4 | 5,4 | 5,1 | 5,9 | 5,4 | 5.1 | 5,4 | 5,5 | 5,9 |
| (I) | Polytetrafluoroethylene | 0,5 | 0,5 | 0,5 | 0,4 | 0,5 | 0,5 | 0,4 | 0,5 | 0,5 | 0,5 |
| Others | Hindered Phenol | 0,3 | 0,3 | 0,3 | 0,3 | 0,3 | 0,3 | 0,3 | 0,3 | 0,3 | 0,3 |
| | Fatty Acid Ester | 0,8 | 0,8 | 0,8 | 0,7 | 0,8 | 0,8 | 0,7 | 0,8 | 0,8 | 0,8 |
| Low Warpage Properties | Flatness [mm] | 1.0 | 1,0 | 1,0 | 1,0 | 3,0 | 0,5 | 4,5 | 1.0 | 1,0 | 3,5 |
| Appearance | Surface Gloss | 103 | 102 | 102 | 104 | 90 | 94 | 87 | 88 | 102 | 91 |
| Durability to Heating and Cooling | Tensile Elongation at Break [%] after 10 Days at 150° C and after 24 Hours at 23° C | 0,9 | 1,0 | 1,2 | 1,0 | - | - | 1,3 | 1,0 | 1,3 | 2,0 |
| | UL94-V (1.5mm) | V-0 | V-0 | V-0 | V-0 | V-0 | V-0 | V-0 | V-0 | V-0 | V-0 |
| Flame Retardancy | UL94-5V(1.5mm) | 5VA | 5VA | 5VA | - | 5VA | - | - | 5VA | 5VA | 5VA |
| Strength | Tensile Strength [MPa] | 88 | 91 | 91 | 67 | 101 | 93 | 104 | 90 | 90 | 103 |
| Elastic Modulus | Flexural Modulus [MPa] | 6170 | 6150 | 6300 | 5020 | 7600 | 7410 | 6810 | 6030 | 5900 | 7600 |
| Heat Resistance | Deflection Temperature under Load [°C] | 199 | 195 | 192 | 160 | - | - | - | 197 | 190 | - |
| Flowability | Melting Viscosity [kPa × s] | 0,17 | 0,21 | 0,24 | 0,15 | 0,20 | 0,18 | - | 0,23 | 0,21 | 0,21 |

It can be seen from Table 1 and Table 2 that the injection-molded article having excellent appearance, low warpage properties, heat resistance and durability to heating and cooling could be obtained in all Examples 1 to 3 that apply the present invention (Example 4 is not according to the present invention). On the other hand, in Comparative Examples 1 to 10, it was not possible to simultaneously satisfy all of appearance, low warpage properties, heat resistance and durability to heating and cooling.

In addition, as described below, the following can be seen from the examples and comparative examples. More specifically:
(1) Durability to heating and cooling is improved when PBT has a high viscosity, based on Comparative Examples 1 to 3 in which only the intrinsic viscosity of PBT is different.
(2) Appearance is excellent when the mass ratio of PBT/PET is 3/1 to 1/1, based on Comparative Examples 2 and 8 in which only the blending ratio of PET and PBT is different.
(3) The elastomer contributes improvement in durability to heating and cooling, based on the comparison of Example 1 and Comparative Example 2, and Example 2 and Comparative Example 3, that are different in the presence and absence of the elastomer.
(4) Durability to heating and cooling is lowered when the amount of elastomer added is lower than the range defined in the present invention, based on the comparison of Example 1, Example 3 and Comparative Example 9, that are different in the amount of elastomer added.
(5) Appearance can be improved by addition of talc, and low warpage properties can be improved by addition of mica, based on the comparison of Comparative Example 1 and Comparative Example 6 in which only the type of the used inorganic filler is different.
(6) Appearance, low warpage properties, and strength and elastic modulus are excellent when the mass ratio of the glass fiber to the inorganic filler is within the range defined in the present invention, based on the comparison of Example 1, Example 4 and Comparative Example 10 in which only the mass ratio is different. In addition, even when the total amount of the fillers (glass fiber and inorganic filler) is the same, appearance and low warpage properties are deteriorated when the ratio of the glass fiber is large, and strength and elastic modulus are lowered when the ratio of the inorganic filler is large, based on the comparison of Comparative Example 4 and Comparative Example 7 in which the total amount of the fillers is same and the component ratio is different. Also, in Comparative Examples 1, 4 and 5, when the mass ratio of the polybutylene terephthalate resin, the glass fiber, and the total amount thereof based on the whole composition is shown as " (a) : the mass ratio of the polybutylene terephthalate resin, (b) : the mass ratio of the glass fiber, (c) : the mass ratio of (a) + (b)", it is shown as "(a) 46.1% by mass, (b) 10% by mass, and (c) 56.1% by mass" in Comparative Example 1, "(a) 51.1% by mass, (b) 5% by mass, and (c) 56.1% by mass" in Comparative Example 4, and " (a) 41.1% by mass, (b) 15% by mass, and (c) 56.1% by mass" in Comparative Example 5. More specifically, in the case shown by the mass ratio based on the whole composition, strength and elastic modulus are lowered when the glass fiber is less contained based on the amount of the resin, and appearance and low warpage properties are deteriorated when the glass fiber is much contained, based on the comparison of these comparative examples in which the total amount of the polybutylene terephthalate resin and the glass fiber is the same and only the component ratio is different.

## Claims

1. An injection-molded article in which (1) the deflection temperature under load in accordance with ISO 75-1 is 165 to 220°C, (2) the surface gloss at 45° by the JIS Z8741 testing method is 95 to 110, (3) the flatness of a flat plate of 120-mm length, 120-mm width and 2-mm thickness as defined in JIS B0021 is 0 to 2 mm, and (4) the tensile elongation at break measured in accordance with ISO 527-1, 2 after heat-treating a test piece for evaluating tensile properties molded according to ISO 3167 in a hot air oven at 150°C for ten days and then treating the test piece at 23°C and 50% RH for 24 hours is 1.5% or more, the injection-molded article comprising, based on 100 parts by mass of the total content of (A) a polybutylene terephthalate resin and (B) a polyethylene terephthalate resin, 3 to 20 parts by mass of (C) an elastomer, 10 to 20 parts by mass of (D) a glass fiber, 10 to 20 parts by mass of (E) an inorganic filler, and 1 part by mass or less of (F) a transesterification inhibitor, wherein the mass ratio of the component (A) and the component (B) (A/B) is 3/1 to 1/1, and the mass ratio of the component (D) and the component (E) (D/E) is 1/1.3 to 1.3/1.

2. The injection-molded article according to claim 1, which is, further, (5a) V-0 in a flame retardant test of UL94 standard.

3. The injection-molded article according to claim 1, which is, further, (5b) 5VA or 5VB in a flame retardant test of UL94 standard.

4. The injection-molded article according to any one of claims 1 to 3, further comprising 10 to 20 parts by mass of (G) a flame retardant, 1 to 10 parts by mass of (H) a flame retardant aid, and 1 part by mass or less of (I) an anti-dripping agent.

5. The injection-molded article according to any one of claims 1 to 4, wherein the (A) polybutylene terephthalate resin has an intrinsic viscosity of 0.80 to 1.20 dL/g.

6. A heat radiation apparatus comprising a housing comprising the injection-molded article according to any one of claims 1 to 5 in all or part of the housing.

7. The heat radiation apparatus according to claim 6, wherein the heat radiation apparatus is an indoor electric appliance, an indoor gas appliance, or an indoor oil appliance.

8. The heat radiation apparatus according to claim 6, wherein the heat radiation apparatus is a heating cooker.

9. The heat radiation apparatus according to claim 8, wherein the heating cooker is an electromagnetic induction heating cooker.

10. Use of the injection-molded article according to any one of claims 1 to 5 in all or part of a housing of a heat radiation apparatus.

11. The use of claim 10, wherein the heat radiation apparatus is an indoor electric appliance, an indoor gas appliance, or an indoor oil appliance.

12. The use of claim 10, wherein the heat radiation apparatus is a heating cooker.

13. The use of claim 12, wherein the heating cooker is an electromagnetic induction heating cooker.

## Patentansprüche

1. Spritzgieß-geformter Gegenstand, in welchem (1) die Formbeständigkeits-Temperatur unter Last in gemäß ISO 75-1 165 bis 220°C ist, (2) der Oberflächen-Glanz bei 45° durch das JIS Z8741 Test-Verfahren 95 bis 110 ist, (3) die Ebenheit einer ebenen Platte von 120 mm Länge, 120 mm Breite und 2-mm Dicke, wie in JIS B0021 definiert, 0 bis 2 mm ist, und (4) die Zugdehnung bei Bruch, gemessen gemäß ISO 527-1, 2 nach Wärme-Behandlung eines Test-Stücks zum Bewerten der Zug-Eigenschaften, geformt gemäß ISO 3167, in einem HeißLuft-Ofen bei 150°C für zehn Tage und dann Behandeln des Test-Stücks bei 23°C und 50% relativer Luftfeuchte für 24 Stunden 1,5 % oder mehr ist, wobei der spritzgieß-geformte Gegenstand, basierend auf 100 Masse-Teilen des Gesamt-Gehalts von (A) einem Polybutylen-Terephthalat-Harz und (B) einem Polyethylen-Terephthalat-Harz, 3 bis 20 Masse-Teile von (C) einem Elastomer, 10 bis 20 Masse-Teile von (D) einer Glas-Faser, 10 bis 20 Masse-Teile von (E) einem anorganischen Füllstoff und 1 Masse-Teil oder weniger von (F) einem Umesterungs-Inhibitor umfasst, wobei das Masse-Verhältnis der Komponente (A) und der Komponente (B) (A/B) 3/1 bis 1/1 ist, und das Masse-Verhältnis der Komponente (D) und der Komponente (E) (D/E) 1/1,3 bis 1,3/1 ist.

2. Spritzgieß-geformter Gegenstand nach Anspruch 1, welcher weiterhin (5a) V-0 in einem Flamm-Hemmungs-Test vom UL94-Standard ist.

3. Spritzgieß-geformter Gegenstand nach Anspruch 1, welcher weiterhin (5b) 5VA oder 5VB in einem Flamm-Hemmungs-Test vom UL94-Standard ist.

4. Spritzgieß-geformter Gegenstand nach einem der Ansprüche 1 bis 3, weiterhin umfassend 10 bis 20 Masse-Teile von (G) einem Flamm-Hemmungs-Mittel, 1 bis 10 Masse-Teile von (H) einer Flamm-Hemmungs-Hilfe und 1 Masse-Teil oder weniger von (I) einem Anti-Tropfmittel.

5. Spritzgieß-geformter Gegenstand nach einem der Ansprüche 1 bis 4, wobei das (A) Polybutylen-Terephthalat-Harz eine Grenz-Viskosität von 0,80 bis 1,20 dl/g aufweist.

6. Wärme-Strahlungs-Vorrichtung, umfassend ein Gehäuse, umfassend den spritzgieß-geformten Gegenstand nach einem der Ansprüche 1 bis 5 insgesamt oder ein Teil von dem Gehäuse.

7. Wärme-Strahlungs-Vorrichtung nach Anspruch 6, wobei die Wärme-Strahlungs-Vorrichtung ein elektrisches Innenraum-Gerät, ein Innenraum-Gas-Gerät oder ein Innenraum-Öl-Gerät ist.

8. Wärme-Strahlungs-Vorrichtung nach Anspruch 6, wobei die Wärme-Strahlungs-Vorrichtung ein Herd ist.

9. Wärme-Strahlungs-Vorrichtung nach Anspruch 8, wobei der Herd ein elektromagnetischer Induktions-Herd ist.

10. Verwendung des spritzgieß-geformten Gegenstands nach einem der Ansprüche 1 bis 5 insgesamt oder in einem Teil von einem Gehäuse von einer Wärme-Strahlungs-Vorrichtung.

11. Verwendung von Anspruch 10, wobei die Wärme-Strahlungs-Vorrichtung ein elektrisches Innenraum-Gerät, ein Innenraum-Gas-Gerät oder ein Innenraum-Öl-Gerät ist.

12. Verwendung von Anspruch 10, wobei die Wärme-Strahlungs-Vorrichtung ein Herd ist.

13. Verwendung von Anspruch 12, wobei der Herd ein elektromagnetischer Induktions-Herd ist.

## Revendications

1. Article moulé par injection dans lequel (1) la température de fléchissement sous charge, conformément à la norme ISO 75-1, est de 165 à 220°C, (2) le brillant de surface à 45°, conformément à la méthode de test de la norme JIS Z8741, est de 95 à 110, (3) la planéité d'une surface plane présentant une longueur de 120 mm, une largeur de 120 mm et une épaisseur de 2 mm, telle que définie dans la norme JIS B0021, est de 0 à 2 mm, et (4) l'allongement à la rupture en traction, mesurée conformément à la norme ISO 527-1,2, après traitement à la chaleur d'une éprouvette pour évaluer les propriétés en traction d'un article moulé conformément à la norme ISO 3167 dans un four à air chaud à 150°C pendant dix jours, et ensuite traitement de l'éprouvette à 23°C sous 50 % HR pendant 24 heures, est de 1,5 % ou plus, l'article moulé par injection comprenant, pour 100 parties en masse de la teneur totale en (A) une résine de poly(téréphtalate de butylène) et (B) une résine de poly(téréphtalate d'éthylène), 3 à 20 parties en masse de (C) un élastomère, 10 à 20 parties en masse de (D) une fibre de verre, 10 à 20 parties en masse de (E) une charge inorganique, et 1 partie en masse ou moins de (F) un inhibiteur de transestérification, dans lequel le rapport en masse du composant (A) sur le composant (B) (A/B) est de 3/1 à 1/1, et le rapport en masse du composant (D) sur le composant (E) (D/E) est de 1/1,3 à 1,3/1.

2. Article moulé par injection selon la revendication 1, qui est en outre classé (5a) V-0 dans un test de retard d'inflammation de la norme UL94.

3. Article moulé par injection selon la revendication 1, qui est en outre classé (5b) 5VA ou 5VB dans un test de retard d'inflammation de la norme UL94.

4. Article moulé par injection selon l'une quelconque des revendications 1 à 3, comprenant en outre 10 à 20 parties en masse de (G) un retardateur d'inflammation, 1 à 10 partie (s) en masse de (H) un auxiliaire de retardateur d'inflammation, et 1 partie en masse ou moins de (I) un agent anti-goutte.

5. Article moulé par injection selon l'une quelconque des revendications 1 à 4, dans lequel la résine de poly(téréphtalate de butylène) (A) présente une viscosité intrinsèque de 0,80 à 1,20 dl/g.

6. Dispositif de radiation de chaleur comprenant un boîtier comprenant l'article moulé par injection selon l'une quelconque des revendications 1 à 5 dans tout ou partie du boîtier.

7. Dispositif de radiation de chaleur selon la revendication 6, lequel dispositif de radiation de chaleur est un appareil électrique pour intérieur, un appareil à gaz pour intérieur, ou un appareil à huile pour intérieur.

8. Dispositif de radiation de chaleur selon la revendication 6, lequel dispositif de radiation de chaleur est un cuiseur à chaleur.

9. Dispositif de radiation de chaleur selon la revendication 8, dans lequel le cuiseur à chaleur est un cuiseur à chaleur à induction électromagnétique.

10. Utilisation de l'article moulé par injection selon l'une quelconque des revendications 1 à 5 dans tout ou partie d'un boîtier d'un dispositif de radiation de chaleur.

11. Utilisation selon la revendication 10, dans laquelle le dispositif de radiation de chaleur est un appareil électrique pour intérieur, un appareil à gaz pour intérieur, ou un appareil à huile pour intérieur.

12. Utilisation selon la revendication 10, dans laquelle le dispositif de radiation de chaleur est un cuiseur à chaleur.

13. Utilisation selon la revendication 12, dans laquelle le cuiseur à chaleur est un cuiseur à chaleur à induction électromagnétique.
